# EUROPÄISCHE PATENTSCHRIFT

(11) **EP 1 328 387 B1**
(45) Veröffentlichungstag und Bekanntmachung des Hinweises auf die Patenterteilung: **28.12.2005**
(21) Anmeldenummer: 01974255.0
(22) Anmeldetag: 14.09.2001
(51) Int. Cl.: B29C 35/08, B05D 3/06, G21K 5/10

(54) **ANLAGE ZUM STRAHLUNGSHÄRTEN**
RADIATION HARDENING INSTALLATION
DISPOSITIF DE DURCISSAGE PAR RAYONNEMENT

(30) Priorität: 14.10.2000 DE 10051109
(43) Veröffentlichungstag der Anmeldung: 23.07.2003
(73) Patentinhaber: Air Liquide Deutschland GmbH, 40235 Düsseldorf (DE)
(72) Erfinder: VOLKER, Wolfgang, 47918 Tönisvorst (DE); BERGHEIM, Silke, 47839 Krefeld (DE)
(74) Vertreter: Kahlhöfer, Hermann
(86) Internationale Anmeldenummer: PCT/EP2001/010652
(87) Internationale Veröffentlichungsnummer: WO 2002/032641

(56) Entgegenhaltungen:
- DE-A- 3 427 315
- DE-A- 19 804 202
- US-A- 2 887 584
- US-A- 3 850 675
- US-A- 4 385 239
- US-A- 5 644 135

## Beschreibung

Die Erfindung betrifft eine Anlage zum Strahlungshärten, bei der mit einer zu härtenden Beschichtung versehene Teile nacheinander einen Eingangsbereich, eine Strahlungskammer und einen Ausgangsbereich durchlaufen, welche Strahlungskammer mit wenigstens einem Strahler für Härtungsstrahlen, beispielsweise Elektronenstrahlen oder ultraviolettes Licht, sowie mit einer Gaszuführung zum Einleiten von Inertgas versehen ist.

Derartige Anlagen sind biespielsweise aus der US 2 887 584 A, US 4 385 239 A, DE 198 04 202 A und DE 34 27 315 A bekannt.

Unter Strahlungshärten versteht man die schnelle Umwandlung von Flüssigkeiten, die hauptsächlich aus Monomeren oder Oligomeren bestehen, in feste Polymere durch Ultraviolett- oder Elektronenbestrahlung. Technische Bedeutung erlangt haben Acrylsäureester, Epoxy-, Polyester-, Urethan- und Polyether-Acrylate sowie Epoxide und Vinylether. Als Quellen für die ultraviolette Strahlung stehen Quecksilber-Mitteldrucklampen oder Exzimerstrahler zur Verfügung. Niederenergie-Elektronenstrahler werden vorwiegend dort eingesetzt, wo dicke und/oder pigmentierte Schichten gehärtet werden müssen.

Seit den Anfängen des Strahlungshärtens ist bekannt, dass Sauerstoff eine Inhibierung bewirkt, welche die Oberflächeneigenschaften beeinträchtigt und zu einer Verlangsamung des Härtungsvorgangs führt. Aus diesem Grunde wurde vorgeschlagen, die Strahlungshärtung unter inerten, d.h. sauerstofffreien Bedingungen durchzuführen, wobei als Inertgas überwiegend Stickstoff zum Einsatz kommt.

In der Firmenzeitschrift "gas aktuell" **54**, 22 (1998) ist eine Anlage zum Strahlungshärten beschrieben, bei der die mit der zu härtenden Beschichtung versehenen Teile unter inerten Bedingungen einer Bestrahlung mit UV- oder Elektronenstrahlen ausgesetzt werden. Da bei der Zuführung der Teile in die Anlage ein Eintrag von Luftsauerstoff unvermeidlich ist, durchlaufen die Teile vor und hinter dem eigentlichen Bestrahlungsbereich jeweils langgestreckte Vortunnel, die jeweils mit Schleusen versehen sind. Der Sauerstoffanteil in der Innenatmosphäre der Anlage wird laufend überwacht und bei Bedarf Inertgas zugeführt.

Nachteilig bei diesem vorbekannten Stand der Technik ist, dass die Schleusung der einzelnen Teile sehr aufwendig ist und einen die Kapazität der Anlage begrenzender Faktor darstellt. Auch findet nach wie vor ein deutlicher Eintrag von Luftsauerstoff in das Innere der Anlage statt, der durch eine entsprechend hohe Zufuhr an Inertgas ausgeglichen werden muss.

Aufgabe der vorliegenden Erfindung ist es demnach, eine Anlage zur Strahlungshärtung zu schaffen, bei welcher der Sauerstoffeintrag in die Strahlungskammer gegenüber Anlagen nach dem Stand der Technik vermindert ist.

Gelöst ist diese Aufgabe bei einer Anlage nach Anspruch 1.

Erfindungsgemäß werden also die Teile in der Strahlkammer zur Bestrahlung in den Oberabschnitt der Strahlkammer geführt. Da die Strahlungskammer für zu- und abgehende Teile nur nach unten hin geöffnet ist, treten im Bereich des Strahlers nur in geringem Umfang konvektive oder turbulente Gasströmungen auf. Derartige Strömungen führen bei Anlagen nach dem Stande der Technik, die eine waagerechte Anordnung von Eingangsbereich, Strahlungskammer und Ausgangsbereich aufweisen, dazu, dass die Inertgasatmosphäre beim Ein- und Ausfahren der Teile teilweise entweicht und dadurch die Sauerstoffkonzentration Bereich der Strahlungskammer erhöht wird. Bei der Erfindung wird dagegen der Eintrag von sauerstoffreichem Gas wirksam vermindert, ohne dass hierfür gesonderte bauliche Maßnahmen, wie Schleusen u. dergl. erforderlich wären. Der turmartige Aufbau der Strahlungskammer führt darüber hinaus zu einer erheblichen Platzersparnis gegenüber konventionellen Anlagen. Wegen des Dichteunterscheides des durch die Strahler erwärmten Gases gegenüber kühlem Gas verbleibt das erwärmte Gas im oberen Bereich der als Turm ausgebildeten Strahlungskammer und entweicht nicht durch den Eingangs- bzw. Ausgangsbereich.

Zweckmäßigerweise ist die Gaszuführung mit dem Oberabschnitt der Strahlungskammer strömungsverbunden. Das Gas, das einer Inertgasquelle, etwa einem Tank oder einer Luftzerlegungsanlage entnommen wird, wird kontinuierlich in den Oberabschnitt der Strahlungskammer eingeleitet und bildet dort ein Verdrängungsgaspolster aus, mittels dessen sauerstoffreiches Gas, das mit den Teilen in die Strahlungskammer eindringt, wirksam verdrängt werden kann.
Um den Eintrag von Sauerstoff zu reduzieren, der den Teilen unmittelbar anhaftet, ist in einer Weiterbildung der Erfindung vorgesehen, den Eingangsbereich mit einer Gasdüse auszurüsten, mittels der ein Inertgasstrahl in Richtung auf die einfahrenden Teile ausgebracht werden kann. Die Teile werden also vor Erreichen der Strahlungskammer mit Inertgas "abgeduscht" und von anhaftenden Sauerstoffresten befreit.

Die Sauerstoffkonzentration in der Strahlungskammer kann weiter wirkungsvoll dadurch reduziert werden, dass im Eingangsbereich und/oder dem Ausgangsbereich jeweils eine Inertgasschleuse und/oder Mittel zum Ausbilden eines Inertgasvorhangs angeordnet ist/sind.
Eine Inertgasschleuse ist beispielsweise aus der DE 39 14 783 A1 vorbekannt, auf die hier ausdrücklich Bezug genommen-wird. Die dort beschriebene Inertgasschleuse weist zwei konzentrisch zueinander angeordnete Rohre auf, die durch einen zu einer Stirnseite hin geschlossenen Ringspalt voneinander getrennt sind. Das äußere Rohr steht auf der Seite, zu der der Ringspalt hin offen ist, gegenüber dem inneren Rohr vor und weist innenseitig, axial beabstandet von der Mündung des inneren Rohres, ein ringförmiges Umlenkblech auf. In den Ringspalt wird Inertgas eingedüst, das auf der offenen Seite des Ringspalts - unterstützt durch das Umlenkblech - zur Rohrachse hin in das Innere der Schleuse strömt. Auf diese Weise wird eine wirkungsvolle Gastrennung hergestellt, ohne dass die Zuführung selbst von komplex geformten dreidimensionalen Teile durch das innere Rohr hindurch beeinträchtigt wird.
Zur Herstellung von Gasvorhängen werden im Eingangsbereich einseitig oder auf zwei gegenüberliegenden Seiten Gasdüsen angeordnet, mittels derer Inertgas in Richtung auf die ein- bzw. ausfahrenden Teile gedüst wird. Gasvorhänge eignen sich insbesondere für flache Teile.

Beide Möglichkeiten haben den gemeinsamen Vorteil, dass der Eintrag von Sauerstoff wirksam vermieden wird, ohne dass aufwendige mechanische Systeme, wir Klappen u.dergl. benötigt werden.

Vorteilhafterweise ist der Strahler beweglich im Innem der Strahlungskammer aufgenommen und kann so in seiner Position der Form oder der Größe der zu bestrahlenden Teile angepasst werden.

Besonders vorteilhaft ist es, wenn der Strahler mit einer Leitstelle in Datenaustausch steht, von der aus die Position des Strahlers, seine Strahlungsintensität und/oder die Dauer der Bestrahlung einstellbar ist. Die Parameter der Bestrahlung Können so individuell für jedes eingefahrene Teil bestimmt werden. Es ist vorstellbar, eine Abfolge von Parametereinstellungen in einem Programm abzubilden, das beim Durchfahren der Teile abläuft. So kann etwa ein Gegenstand nacheinander von verschiedenen Seiten mit unterschiedlichen Strahlungsdauern oder Strahlungsintensitäten oder - bei Vorliegen mehrerer Strahler in der Strahlungskammer - unterschiedlicher Strahlungsarten beaufschlagt werden. Auch kann durch geeignete Erkennungsvorrichtungen, etwa eine elektronische Kamera, die jeweils einfahrende Teileart erkannt und ein hierfür spezifiziertes Bestrahlungsprogramm in Gang gesetzt werden.

In einer besonders bevorzugten Weiterbildung der Erfindung sind innerhalb einer Strahlungskammer sowohl wenigstens ein UV-Strahler als auch zumindest ein Elektronenstrahler hintereinander angeordnet. So kann etwa bei der Oberflächenveredelung von Holzwerkstoffen die Vorhärtung einer Grundierung oder ein Gelierschritt mit UV-Lampen und anschließend die Durchhärtung des Gesamtaufbaus mit Elektronenstrahlbehandlung erfolgen.

Als bevorzugtes Inertgas kommt Stickstoff oder ein Edelgas, etwa Argon oder Mischungen hiervon, beispielsweise 0-10% Argon in Stickstoff, in Betracht.

Anhand der Zeichnung soll nachfolgend ein Ausführungsbeispiel der Erfindung näher erläutert werden.

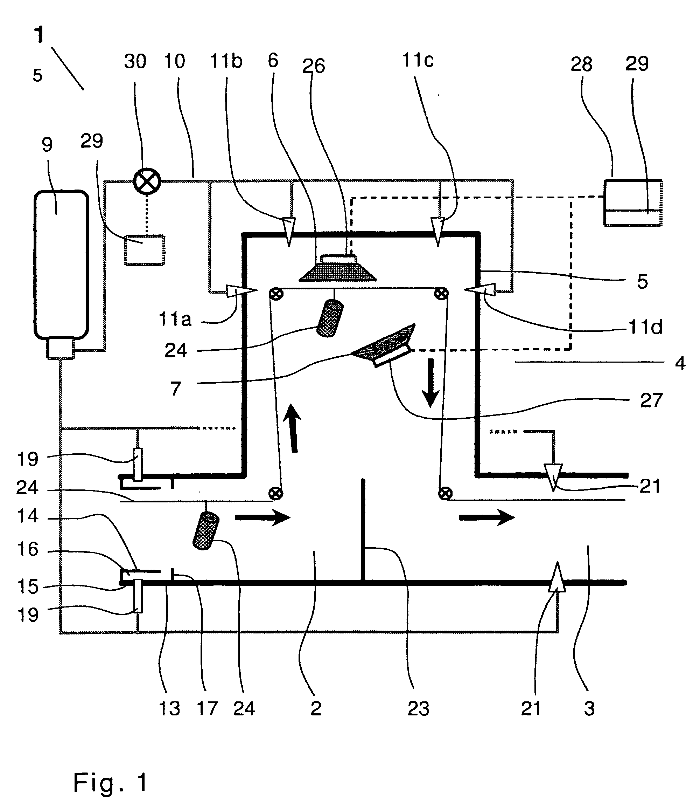

Die einzige Zeichnung (Fig. 1) zeigt schematisch eine erfindungsgemäße Anlage zum Strahlungshärten.

Die in Fig. 1 gezeigte, der Strahlungshärtung von mit Lack oder Farbe beschichteten Gegenständen dienende Anlage 1 weist einen Eingangsbereich 2 und einen Ausgangsbereich 3 auf, die mit einem unteren Abschnitt einer Strahlungskammer 4 verbunden sind. In einem oberen Abschnitt der Strahlungskammer 4 befindet sich der eigentliche Strahlungsbereich 5, in dem mehrere Strahler 6,7, im Beispiel Ultraviolettstrahler oder Elektronenstrahler angeordnet sind.

Die nach oben, also auf der dem Eingangsbereich 2 bzw. dem Ausgangsbereich 3 gegenüberliegende Seite hin gasdicht geschlossene Strahlungskammer 4 ist mit einem Inertgas, beispielsweise Stickstoff befüllbar. Hierzu wird das Inertgas einer Inertgasquelle, etwa eine Luftzerlegungsanlage oder, wie im Ausführungsbeispiel, ein Stickstofftank 9, entnommen und über eine Gaszuführung 10 mittels Gasdüsen 11a-d in den Strahlungsbereich 5 der Strahlungskammer 4 eingeleitet. Das eingeleitete Inertgas bildet im Innem der Strahlungskammer 4 ein Verdrängungsgaspolster aus, das ein etwaig im Eingangsbereich 2 oder im Ausgangsbereich 3 vorhandenes sauerstoffreiches Gas zurückdrängt. Die Aufheizung des Inertgases durch die Strahler 6,7 trägt mit dazu bei, dass sich keine konvektive Strömung aus dem Eingangsbereich 2 oder dem Ausgangsbereich 3 in den Strahlungsbereich 5 ausbilden kann.

Um die Sauerstoffkonzentration in der Strahlungskammer weiter zu reduzieren, ist im Eingangsbereich 2 eine Gasschleuse 13 vorgesehen. Die Gasschleuse 13 umfasst zwei konzentrisch zueinander angeordnete Rohre 14,15, die durch einen einseitig geschlossenen Ringspalt 16 voneinander getrennt sind. Das innere Rohr 14 erstreckt sich nur ein begrenztes Stück weit in das Innere des äußeren Rohrs 15, das zugleich die äußere Begrenzung des Eingangsbereiches 2 bildet, hinein. Axial beabstandet vom inneren Rohr 14 ist im äußeren Rohr 15 ein ringförmiges Umlenkblech 17 angeordnet. Inertgas wird aus dem Stickstofftank 9 im äußeren Rohr 15 in gleichmäßigen Winkelabständen angeordneten Düsen 19 zugeführt und in das Innere des Ringspalts 16 eingedüst. Anschließend strömt das Inertgas durch den Ringspalt 16 hindurch und wird mittels des Umlenkbleches 17 in Richtung auf die Rohrachse gelenkt. Hierdurch bildet sich ein Gasvorhang, der die Atmosphäre im Innern der Anlage 1 wirksam von der Umgebungsluft trennt.

Im Ausgangsbereich sind im Ausführungsbeispiel auf zwei gegenüberliegenden Seiten jeweils mehrere parallel zueinander angeordnete Gasdüsen 21 vorgesehen, die ebenfalls mit dem Stickstofftank 9 strömungsverbunden sind. Die Gasdüsen 21 dienen zur Ausbildung von zwei gegeneinander gerichteten Gasvorhangen, durch die der Eintrag von Sauerstoff aus der Umgebungsatmosphäre der Anlage 1 ebenfalls gehemmt wird. Eine zwischen dem Eingangsbereich 2 und dem Ausgangsbereich 3 angeordnete Trennwand 23 verhindert die Ausbildung turbulenter Strömungen, die einen Sauerstoffeintrag in die Strahlungskammer 4 verursachen könnten.

Beim bestimmungsgemäßen Einsatz der Anlage 1 werden Gegenstände 24, die eine beliebige dreidimensionale Struktur aufweisen, beispielsweise Lampengläser oder Kotflügel, mittels eines Fördersystems 25, das über Umlenkrollen entsprechend geführt wird, in Pfeilrichtung nacheinander durch den Eingangsbereich 2, die Strahlungskammer4 und den Ausgangsbereich 3 geführt. Im Strahlungsbereich 5 der Strahlkammer 4 werden die Gegenstände 24 mit von den Strahlern 6,7 emittierten Strahlen, etwa ultraviolettes Licht oder Elektronenstrahlen, bestrahlt. Dabei werden auf den Oberflächen aufgetragene Beschichtungen, insbesondere fotosensitive Farben oder Lacke, gehärtet. Um eine im Hinblick auf den jeweiligen Gegenstand 24 und die auf diesem aufgetragene Beschichtung optimale Strahlungswirkung zu erzielen, sind die Strahler 6,7 beweglich im Strahlungsbereich 5 aufgenommen und können mittels geeigneter Motoren 26, 27 oder sonstiger Verstelleinrichtungen bewegt werden. Die Motoren 26,27 sowie die Strahler 6,7 sind mit einer Leitzentrale 28 verbunden, von der aus Steuerbefehle zur Positionierung der Strahler 6,7, zur Einstellung der Strahlungsintensität sowie der Strahlungsdauer gegeben werden können. Es ist auch vorstellbar, dass die genannten Strahlungsparameter in Abhängigkeit von dem jeweils zu bestrahlenden Gegenstand 24 nach einem für diesen Gegenstand spezifizierten Programm automatisch ablaufen. Die Leitzentrale 28 weist zu diesem Zweck einen elektronischen Speicher 29 auf, in dem derartige Programme abgelegt und bei Bedarf abgerufen werden können. Mittels hier nicht gezeigter Mess- und Regeleinrichtung 29 kann die Sauerstoffkonzentration in der Strahlungskammer 4 erfasst und die Inertgaszufuhr entsprechend dem gemessenen Wert über ein in der Gaszuführung 10 angeordnetes Ventil 30 geregelt werden.

Die Anlage 1 eignet sich zur Strahlungshärtung für Beschichtungen von Gegenständen mit einer beliebigen Oberflächenstruktur. Die Gegenstände können kontinuierlich, ohne aufwendige Schleusungs- oder Spülvorgänge durch die Anlage 1 hindurchgeführt werden. Die Strahlungshärtung findet in einer nahezu staub- und sauerstofffreien Umgebung statt. Der Verbrauch an Inertgas zum weitgehenden Inertisierung des Strahlungsbereiches 5 ist äußerst gering und umfasst im optimalen Fall lediglich ein Volumen, das dem Volumen des durch die Gegenstände 24 selbst oder das Fördersystem 25 eingetragenen Sauerstoffs entspricht.

### Bezugszeichenliste

- 1.: Anlage
- 2.: Eingangsbereich
- 3.: Ausgangsbereich
- 4.: Strahlkammer
- 5.: Strahlungsbereich
- 6.: Strahler
- 7.: Strahler
- 8.: -
- 9.: Stickstofftank
- 10.: Gaszuführung
- 11a.-11d.: Gasdüsen
- 12.: -
- 13.: Gasschleuse
- 14.: inneres Rohr
- 15.: äußeres Rohr
- 16.: Ringspalt
- 17.: Umlenkblech
- 18.: -
- 19.: Düsen
- 20.: -
- 21.: Gasdüsen
- 22.: -
- 23.: Trennwand
- 24.: Gegenstand
- 25.: Fördersystem
- 26.: Motor
- 27.: Motor
- 28.: Leitzentrale
- 29.: elektronischer Speicher
- 30.: Mess- und Regeleinrichtung
- 31.: Ventil

## Patentansprüche

1. Anlage zum Strahlungshärten, bei der mit einer zu härtenden Beschichtung versehene Teile (24) nacheinander einen Eingangsbereich (2), eine Strahlungskammer (4) und einen Ausgangsbereich (3) durchlaufen, welche Strahlungskammer (4) mit wenigstens einem Strahler für Härtungsstrahlen (6,7), beispielsweise Elektronenstrahlen oder ultraviolettes Licht, sowie mit einer Gaszuführung (10) zum Einleiten von Inertgas versehen ist,
**dadurch gekennzeichnet,**
**dass** die Strahlungskammer (4) als Turm ausgebildet ist, der in einem unteren Abschnitt mit dem Eingangsbereich (2) und dem Ausgangsbereich (3) verbunden und in dessen Oberabschnitt (5) der Strahler (6,7) angeordnet ist und vorgesehen ist, dass die Teile (24) in der Strahlungskammer (4) zur Bestrahlung in den Oberabschnitt (5) der Strahlungskammer (4) geführt werden.

2. Anlage nach Anspruch 1, **dadurch gekennzeichnet, dass** die Gaszuführung (10) mit dem Oberabschnitt (5) der Strahlungskammer (4) sowie mit einer Inertgasquelle (9) zum kontinuierlichen Zuführen von Inertgas strömungsverbunden ist.

3. Anlage nach Anspruch 1 oder 2, **dadurch gekennzeichnet, dass** der Eingangsbereich (2) mit einer Gasdüse ausgerüstet ist, mittels der ein Inertgasstrahl in Richtung auf die einfahrenden Teile (24) ausgebracht werden kann.

4. Anlage nach einem der vorhergehenden Ansprüche, **dadurch gekennzeichnet, dass** im Eingangsbereich (2) und/oder im Ausgangsbereich (3) jeweils eine Inertgasschleuse (13) oder Mittel (21) zum Ausbilden eines Inertgasvorhangs angeordnet ist/sind.

5. Anlage nach einem der vorhergehenden Ansprüche, **dadurch gekennzeichnet, dass** der Strahler (6,7) beweglich, jedoch fixierbar in der Strahlungskammer (4) aufgenommen ist.

6. Anlage nach Anspruch 5, **dadurch gekennzeichnet, dass** der Strahler (6,7) mit einer Leitstelle (28) in Datenaustausch steht, von der aus die Position des Strahler (6,7) in Abhängigkeit von den zu behandelnden Teilen (24) und/oder in Strahlungsintensität und/oder die Strahlungsdauer einstellbar ist.

7. Anlage nach Anspruch nach einem der vorhergehenden Ansprüche, **dadurch gekennzeichnet, dass** in der Strahlungskammer (4) - in Laufrichtung der Teile (24) gesehen - nacheinander zumindest ein UV- Strahler (6,7) und zumindest ein Elektronenstrahler (7,6) angeordnet sind.

8. Verwendung von Stickstoff, ein Edelgas oder ein Stickstoff oder ein Edelgas enthaltendes Gas als Inertgas in einer Anlage nach einem der vorhergehenden Ansprüche.

## Claims

1. Radiation curing installation, in which parts (24) provided with a coating that is to be cured successively pass through an entry region (2), a radiation chamber (4) and an exit region (3), which radiation chamber (4) is provided with at least one radiation emitter for emitting curing radiation (6, 7), for example in electron beams or ultraviolet light, and with a gas feed (10) for introducing inert gas, **characterized in that** the radiation chamber (4) is designed as a tower which in a lower section is connected to the entry region (2) and the exit region (3) and in the upper section (5) of which the radiation emitter (6, 7) is arranged and provided, **in that** the parts (24) in the radiation chamber (4) are guided so as to be irradiated in the upper section (5) of the radiation chamber (4).

2. Installation according to Claim 1, **characterized in that** the gas feed (10) is flow-connected to the upper section (5) of the radiation chamber (4) and to an inert gas source (9) for continuously supplying inert gas.

3. Installation according to Claim 1 or 2, **characterized in that** the entry region (2) is equipped with a gas nozzle, by means of which an inert gas jet can be discharged in the direction of the incoming parts (24).

4. Installation according to one of the preceding claims, **characterized in that** an inert gas lock (13) or means (21) for forming an inert gas curtain is/are arranged in the entry region (2) and/or in the exit region (3).

5. Installation according to one of the preceding claims, **characterized in that** the radiation emitter (6, 7) is accommodated moveably but fixably in the radiation chamber (4).

6. Installation according to Claim 5, **characterized in that** the radiation emitter (6, 7) exchanges data with a control station (28), from which the position of the radiation emitter (6, 7) can be set as a function of the parts (24) to be treated and/or the radiation intensity and/or the radiation duration can be set.

7. Installation according to one of the preceding claims, **characterized in that** at least one UV radiation emitter (6, 7) and at least one electron radiation emitter (7, 6) are arranged in succession - as seen in the direction of movement of the parts (24) - in the radiation chamber (4).

8. Use of nitrogen, a noble gas or a gas containing nitrogen or a noble gas as inert gas in an installation according to one of the preceding claims.

## Revendications

1. Dispositif de durcissage par rayonnement, dans lequel des pièces (24) pourvues d'un revêtement à durcir traversent successivement une zone d'entrée (2), une chambre de rayonnement (4) et une zone de sortie (3), laquelle chambre de rayonnement (4) est équipée d'au moins un projecteur de rayons de durcissage (6, 7), par exemple de rayons électroniques ou de lumière ultraviolette, ainsi que d'une alimentation en gaz (10) pour la conduction de gaz inerte,
**caractérisé en ce que**
la chambre de rayonnement (4) est réalisée sous forme d'une tour qui est reliée dans une section inférieure à la zone d'entrée (2) et à la zone de sortie (3) et dans la section supérieure (5) de laquelle est disposé le projecteur (6, 7) et qu'il est prévu que les pièces (24) se trouvant dans la chambre de rayonnement (4) soient conduites pour irradiation dans la section supérieure (5) de la chambre de rayonnement (4).

2. Dispositif selon la revendication 1, **caractérisé en ce que** l'alimentation en gaz (10) est reliée au niveau écoulement à la section supérieure (5) de la chambre de rayonnement (4) ainsi qu'à une source de gaz inerte (9) pour permettre l'apport continu de gaz inerte.

3. Dispositif selon la revendication 1 ou 2, **caractérisé en ce que** la zone d'entrée (2) est équipée d'une tuyère à gaz qui permet d'envoyer un rayon de gaz inerte en direction des pièces entrantes (24).

4. Dispositif selon l'une quelconque des revendications précédentes, **caractérisé en ce que**, dans la zone d'entrée (2) et/ou dans la zone de sortie (3), est/sont disposé(s) respectivement une vanne à gaz inerte (13) ou des moyens (21) permettant de constituer un rideau de gaz inerte.

5. Dispositif selon l'une quelconque des revendications précédentes, **caractérisé en ce que** le projecteur (6, 7) est reçu de manière mobile, mais avec possibilité de fixation, dans la chambre de rayonnement (4).

6. Dispositif selon la revendication 5, **caractérisé en ce que** le projecteur (6, 7) est en échange de données avec un poste directeur (28) d'où la position du projecteur (6, 7) est réglable en fonction des pièces à traiter (24) et/ou l'intensité de rayonnement et/ou la durée de rayonnement est/sont réglable(s).

7. Dispositif selon l'une quelconque des revendications précédentes, **caractérisé en ce que**, dans la chambre de rayonnement (4) -vu dans le sens de passage des pièces (24)- sont disposés l'un derrière l'autre au moins un projecteur d'UV (6, 7) et au moins un projecteur d'électrons (7, 6).

8. Utilisation d'azote, de gaz rare ou de gaz contenant de l'azote ou un gaz rare comme gaz inerte dans un dispositif selon l'une quelconque des revendications précédentes.
